# EUROPEAN PATENT APPLICATION

(11) **EP 4 513 643 A1**
(43) Date of publication of application: **26.02.2025**
(21) Application number: 23936787.3
(22) Date of filing: 20.11.2023
(51) Int. Cl.: H01M 50/209, H01M 50/244, H01M 50/249, H01M 50/258, H01M 10/613, H01M 10/625, H01M 10/6567

(54) **BATTERY MODULE AND BATTERY PACK**

(30) Priority: 20.06.2023 CN 202321591191 U
(71) Applicant: Eve Energy Co., Ltd, Huizhou, Guangdong 516006 (CN)
(72) Inventor: ZHOU, Hongquan, Huizhou Guangdong 516006 (CN)
(74) Representative: Berggren Oy
(86) International application number: PCT/CN2023/132534
(87) International publication number: WO 2024/259885

(57) **Abstract**

This application discloses a battery module and a battery pack. The battery module includes a cell assembly and a tray. The cell assembly includes a plurality of cell groups. The plurality of cell groups are arranged at intervals along a first direction. Each of the cell groups includes a plurality of cells. **In** any one of the cell groups, the plurality of cells are arranged at intervals along a second direction. The tray includes a plurality of cell accommodating grooves arranged at intervals along the first direction. A coolant flow channel is arranged in a side wall of each of the cell accommodating grooves, and one of the cell accommodating grooves is disposed corresponding to one of the cell sub groups.

## Description

This application claims priority to Chinese Patent Application No. 202321591191.4 submitted to the Chinese Patent Office on June 20, 2023. The entire disclosure of the aforementioned application is incorporated herein by reference in its entirety.

### TECHNICAL FILED

The present disclosure relates to the technical field of batteries, in particular to a battery module and a battery pack.

### BACKGROUND

As one of the core components of electric vehicles, power batteries are the energy center of electric vehicles. As power battery technology becomes more and more widely used, the market puts forward higher requirements for the cruising range and safety of power batteries.

At present, group technology of the commonly used power battery pack in the industry is cell to pack (CTP) technology, that is, CTP technology is adopted without the need for end plates, side plates or straps. CTP technology reduces costs and improves product cost performance. However, the power battery will generate a significant amount of heat during the charging and discharging process. In order to ensure the service life of the power battery, it needs to dispose an additional liquid cooling plate on the cell tray to dissipate heat from the battery module in related technologies, resulting in complicated battery system design and high cost.

### SUMMARY

The embodiments of the present disclosure provide a battery module and a battery pack for solving or at least partially solving the shortcomings of the above background.

The embodiments of the present disclosure provide a battery module, including:
a cell assembly including a plurality of cell sub groups disposed at intervals along a first direction, in which each of the cell sub groups includes a plurality of cells, and the plurality of cells in any one of the cell sub groups are disposed at intervals along a second direction; and
a tray including a plurality of cell accommodating grooves disposed at intervals along the first direction, in which one of the cell accommodating grooves is provided corresponding to one of the cell sub groups, and a coolant flow channel is arranged in a side wall of each of the cell accommodating grooves.

The embodiments of the present disclosure provide a battery pack, including:
a box including a bottom plate and a plurality of side beams, in which the plurality of side beams are fixedly arranged on edges of the bottom plate to enclose to form an accommodation cavity; and
a plurality of cell modules located in the accommodation cavity, in which the plurality of cell modules are disposed at intervals along a first direction, each of the cell modules includes a plurality of battery modules disposed at intervals along a second direction, and the battery modules include the battery module described above.

Beneficial effects of the embodiments of the present disclosure: The embodiment of the present disclosure provides a battery module and a battery pack. The battery module includes a cell assembly and a tray. The cell assembly includes a plurality of cell groups arranged at intervals along a first direction. Each of the cell groups includes a plurality of cells arranged at intervals along a second direction. The tray includes a plurality of cell accommodating grooves arranged at intervals along the first direction. One of the cell accommodating grooves is arranged corresponding to one of the cell sub groups. A coolant flow channel is arranged in a side wall of each of the cell accommodating grooves. By providing a coolant flow channel in the side wall of the cell accommodating groove, the coolant flow channel and the tray are integrated into a whole. There is no need to additionally provide a liquid cooling plate. The structure is more simplified, the space utilization of the battery module can be effectively improved, and the manufacturing cost of the battery module can be reduced.

### BRIEF DESCRIPTION OF THE DRAWINGS

FIG. 1 is a schematic structural view of a battery module provided by some embodiments of the present disclosure.
FIG. 2 is an explosion view of the battery module provided by some embodiments of the present disclosure.
FIG. 3 is a schematic cross-sectional view at a position A-A' in FIG. 1.
FIG. 4 is a top view of a liquid cooling assembly provided by some embodiments of the present disclosure.
FIG. 5 is a schematic cross-sectional view of a cooling plate provided by some embodiments of the present disclosure.
FIG. 6 is a schematic structural view of a battery pack provided by some embodiments of the present disclosure.
FIG. 7 is a cross-sectional top view of the battery pack provided by some embodiments of the present disclosure.
FIG. 8 is a schematic cross-sectional view of the battery pack provided by some embodiments of the present disclosure.

### Reference numerals:

1, battery module; 10, cell assembly; 20, liquid cooling assembly;
11, cell sub group; 12, heat insulating layer; 13, thermally conductive structural adhesive;
111, cell; 111A, first side surface; 111B, second side surface; 111C, explosion-proof valve;
21, tray; 22, cooling plate; 23, connecting member; 24, current collector;
21A, cell accommodating groove; 211, baseplate; 231, bellows; 241, first current collector; 242, second current collector; 210, pressure relief hole;
221 coolant flow channel; 221A, liquid inlet port; 221B, liquid outlet port; 24A, liquid inlet hole; 24B, liquid outlet hole;
2, battery pack; 2A, box; 2B, cell module; 2C, accommodation cavity; 2D, annular structure; 2E, pressure relief channel;
2A1, bottom plate; 2A2, side beam; 2A3, liquid inlet pipelines; 2A4, liquid outlet pipelines; 2C1, accommodating sub cavity;
2A31, liquid inlet opening; 2A32, liquid inlet nozzle; 2A41, liquid outlet opening; 2A42, liquid outlet nozzle;
1A, first battery module; 1B, second battery module; 1C, third battery module; 1D, fourth battery module; 22A, first cooling plate; 22B second cooling plate; 22A1 extension portion; 22A11, first opening.

### DETAILED DESCRIPTION

In the description of the present disclosure, it should be understood that, unless specified or limited otherwise, the terms "connected" and "coupled" are used broadly, and may be, for example, fixed connections or detachable connections; may also be mechanical connections or electrical connections; may also be direct connections or indirect connections via intervening structures; may also be inner communications of two elements or interaction relationships between two elements. For those ordinary skilled in the art, the specific meanings of the above-mentioned terms in the present disclosure can be understood on a case-by-case basis.

In the description of the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on", "above", or "on top of" a second feature may include an embodiment in which the first feature is right or obliquely "on", "above", or "on top of" the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

The embodiments of the present disclosure provide a battery module and a battery pack. Hereinafter, each of them will be described in detail. It should be noted that the order of description of the following embodiments is not intended to limit the preferred order of the embodiments.

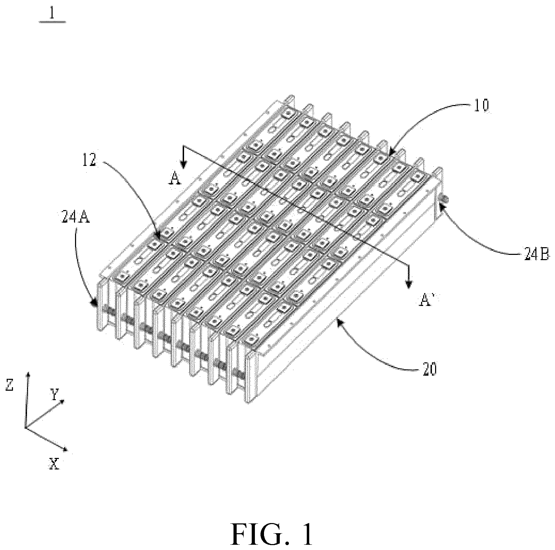

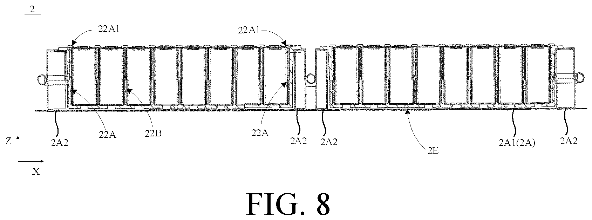

Referring to FIGS. 1 to 8, a battery module, a battery pack, and an electrical device are provided by some embodiments. The battery module 1 includes a cell assembly 10 and a tray 21. The cell assembly 10 includes a plurality of cell sub groups 11. The plurality of cell sub groups 11 are arranged at intervals along a first direction X. The cell sub group 11 includes a plurality of cells 111. In any one of the cell sub groups 11, the plurality of cells 111 are arranged at intervals along a second direction Y. The tray 21 includes a plurality of cell accommodating grooves 21A arranged at intervals along the first direction X. One cell accommodating groove is arranged corresponding to one cell sub group 11. A coolant flow channel 221 is arranged in a side wall of the cell accommodating groove 21A.

It should be noted that, in related technologies, group technology of the commonly used power battery pack in the industry is cell to pack (CTP) technology, that is, CTP technology is adopted without the need for end plates, side plates or straps. CTP technology reduces costs and improves product cost performance. However, the power battery will generate a significant amount of heat during the charging and discharging process. In order to ensure the service life of the power battery, it is need to dispose an additional liquid cooling plate on the cell tray to dissipate heat from the battery module, resulting in complicated battery system design and high cost.

It can be understood that in the embodiments, by providing the coolant flow channel 221 in the side wall of the cell accommodating groove 21A, the coolant flow channel 221 and the tray 21 are integrated into a whole without providing an additional liquid cooling plate. The structure is more simplified, the space utilization of the battery module 1 can be effectively improved, and the manufacturing cost of the battery module 1 can be reduced.

The technical solutions of the present disclosure will be described hereinafter with reference to the specific embodiments.

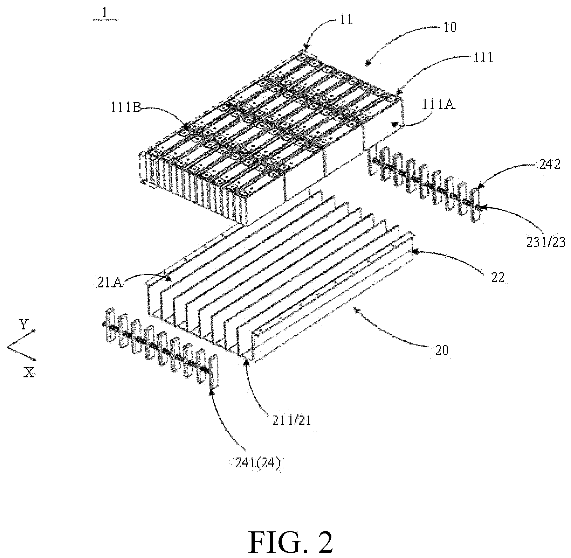

In some embodiments, referring to FIGS. 1 and 2, FIG. 1 is a schematic structural view of the battery module provided by the embodiments of the present disclosure, and FIG. 2 is an explosion view of the battery module provided by the embodiments of the present disclosure.

The embodiments provide a battery module 1 including a cell assembly 10 and a tray 21. The cell assembly 10 includes a plurality of cell sub groups 11. The plurality of cell sub groups 11 are arranged at intervals along a first direction X. The cell sub group 11 includes a plurality of cells 111. In any one of the cell sub groups 11, the plurality of cells 111 are arranged at intervals along a second direction Y. The tray 21 includes a plurality of cell accommodating grooves 21A arranged at intervals along the first direction X. One cell accommodating groove is arranged corresponding to one cell sub group 11. A coolant flow channel 221 is arranged in a side wall of the cell accommodating groove 21A.

In some embodiments, the battery module 1 further includes a plurality of current collectors 24 disposed at both ends of the side wall of the cell accommodating groove 21A. A plurality of connecting members 23 are disposed between adjacent current collectors 24. The current collectors 24 on one side are provided with a liquid inlet hole 24A, and the current collectors 24 on another side are provided with a liquid outlet hole 24B. When the battery module 1 is in a usage state, the coolant flow channel 221 is filled with coolant, and the coolant circulates in and out of the coolant flow channel 221 through the liquid inlet hole 24A and the liquid outlet hole 24B. The connecting member 23 includes, but is not limited to, a bellows 231.

It should be noted that, in the present disclosure, the first direction is marked by X, the second direction is marked by Y, and the first direction X and the second direction Y form a preset included angle. In some embodiments, the present disclosure is illustrated by taking the preset included angle as a right angle as an example.

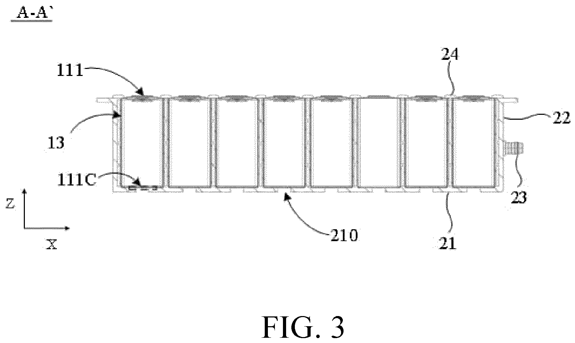

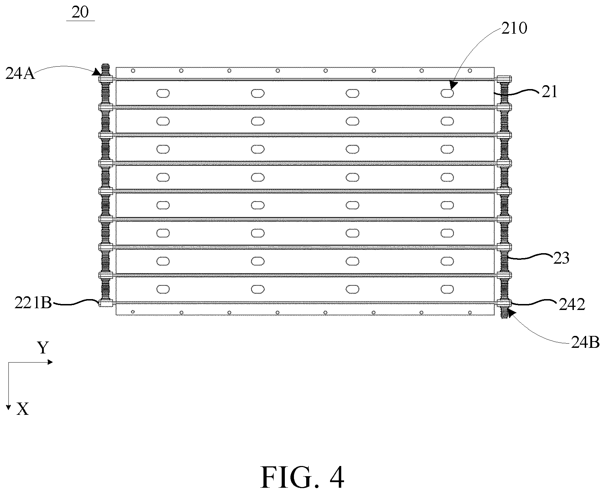

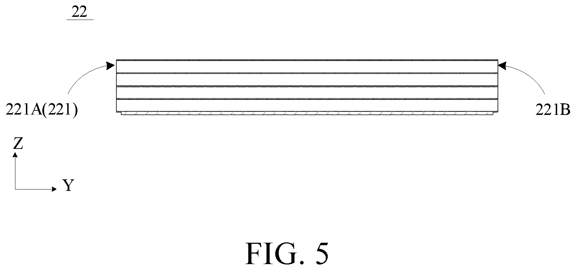

In some embodiments, referring to FIGS. 2, 3, 4, and 5. FIG. 3 is a schematic cross-sectional view at position A-A' in FIG. 1. FIG. 4 is a top view of a liquid cooling assembly provided by the embodiments of the present disclosure. FIG. 5 is a schematic cross-sectional view of a cooling plate provided by the embodiments of the present disclosure.

The tray 21 includes a baseplate 211 and a plurality of cooling plates 22 located on the baseplate 211. The plurality of cooling plates 22 are arranged at intervals along the first direction X. One cell accommodating groove 21Ais located between adjacent cooling plates 22. The tray 21 and the cooling plates 22 may be integrally formed. The cooling plates 22 and the current collectors 24 may be fixed by welding, thereby simplifying the structure of the tray 21 and reducing costs.

In some embodiments, the cooling plate 22 includes a plurality of coolant flow channels 221. The plurality of coolant flow channels 221 are arranged at intervals along the third direction Z. The coolant flow channels 221 penetrate the cooling plate 22 along the second direction Y. Both ends of the coolant flow channel 221 are provided with a liquid inlet port 221A and a liquid outlet port 221B, respectively. The liquid inlet port 221A is in communication with the liquid inlet hole 24A. Aliquid outlet port 221B is in communication with the liquid outlet hole 24B.

It should be noted that in the present disclosure, the third direction is marked by Z. The third direction Z is provided perpendicular to the first direction X. The third direction Z is provided perpendicular to the second direction Y.

Specifically, the battery module 1 includes a plurality of first current collectors 241 and a plurality of second current collectors 242. The first current collectors 241 are provided with the liquid inlet hole 24A. The second current collectors 242 are provided with the liquid outlet hole 24B. Both ends of the coolant flow channel 221 are provided with a liquid inlet 221A and a liquid outlet 221B, respectively. The liquid inlet port 221A is in communication with the first current collectors 241. The liquid outlet port 221B is in communication with the second current collectors 242. The coolant flow channel 221 is preferably a linear channel. The coolant circulates in and out of the cooling plate 22 through the liquid inlet hole 24A, the liquid inlet port 221A, the coolant flow channel 221, the liquid outlet port 221B, and the liquid outlet hole 24B.

It can be understood that in the embodiments, the coolant flow channel 221 is provided in the side wall of the cell accommodating tank 21A, that is, in the cooling plate 22, the coolant flow channel 221 and the tray 21 are integrated into a whole. The cooling plate 22 is filled with coolant, and the coolant circulates in and out of the cooling plate 22 through the liquid inlet hole 24A, the liquid inlet port 221A, the coolant flow channel 221, the liquid outlet port 221B, and the liquid outlet hole 24B, so that liquid cooling heat dissipation of the cell 111 can be achieved. There is no need to provide an additional liquid cooling plate in the related art, so that the space utilization of the battery module 1 can be effectively improved, and the manufacturing cost of the battery module 1 can be reduced.

In some embodiments, the cell 111 includes a first side surface 111A and a second side surface 111B. The first side surface 111A is disposed close to a side wall of the cell accommodating groove 21A. The second side surface 111B is located between adjacent cells 111. A length of the first side surface 111A is greater than a length of the second side surface 111B. The battery module 1 further includes a plurality of heat insulating layers 12 and a plurality of thermally conductive structural adhesives 13. The heat insulating layer 12 is located between the second side surfaces 111B of the adjacent cells 111. The thermally conductive structural adhesive 13 is located between the side wall of the cell accommodating groove 21A and the cell 111. The heat insulating layer 12 is preferably one or more of a fiber layer, a heat insulating foam, a heat insulating cotton, and a heat conductive adhesive.

In some embodiments, the cell 111 is a square shell cell. The cooling plate 22 has a flat structure to be adapted to the first side surface 111A of the square shell cell. It can be understood that in some embodiments, by providing the heat insulating layer 12 to be filled between the adjacent cells 111, the cooling efficiency of the cells 111 is improved. Further, by providing the thermally conductive structural adhesive 13 to be filled between the cell 111 and the cooling plate 22, the cell 111 and the cooling plate 22 are closely attached to each other, thereby improving the tightness and stiffness of the liquid cooling assembly 20, thereby preventing the cell 111 from expanding to affect the service life of the battery module 1. In some embodiments, a structural adhesive (not shown in the figure) may also be used to fixedly connect the cell 111 with the tray 21. The connection is convenient and reliable, and the cell 111 is effectively prevented from loosening and falling off.

It should be noted that an explosion-proof valve 111C is provided on a side of the cell 111 close to the baseplate 211. The baseplate 211 is provided with a plurality of pressure relief holes 210. The pressure relief holes 210 penetrate the baseplate 211 along the thickness direction of the baseplate. One pressure relief hole 210 is provided corresponding to one explosion-proof valve 111C. One end of the cell 111 provided with the explosion-proof valve 111C is in communication with the pressure relief hole 210.

Specifically, the cell 111 includes a thermal runaway nozzle. The thermal runaway nozzle is provided correspondingly to the explosion-proof valve 111C. The explosion-proof valve 111C is installed on the thermal runaway nozzle. It can be understood that when thermal runaway occurs in one of the cells 111 on the tray 21, the chemicals and gases of the cell 111 are directionally ejected from the thermal runaway nozzle. The thermal runaway nozzle of the cell 111 is aligned with the pressure relief hole 210, so that both the chemicals and gases of the cell 111 are directionally ejected into the pressure relief hole 210, thereby releasing pressure from the pressure relief hole 210 to the outside of the battery module 1.

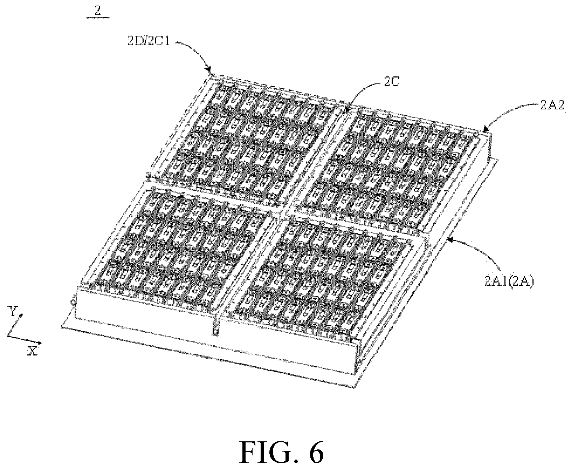

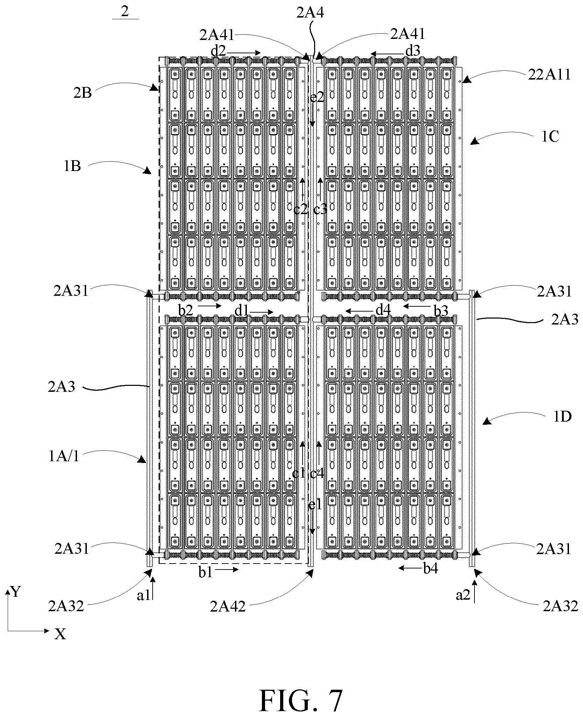

In some embodiments, referring to FIGS. 1, 4, 6, and 7. FIG. 6 is a schematic structural view of a battery pack provided by some embodiments of the present disclosure. FIG. 7 is a cross-sectional top view of the battery pack provided by some embodiments of the present disclosure.

The present embodiments provide a battery pack 2 including a box 2A and a plurality of cell modules 2B. The box 2A includes a bottom plate 2A1 and a plurality of side beams 2A2. The plurality of side beams 2A2 are fixedly arranged on the edges of the bottom plate 2A1 to enclose to form a accommodation cavity 2C. The plurality of cell modules 2B are located in the accommodation cavity 2C. The plurality of cell modules 2B are arranged at intervals along the first direction X. The plurality of cell module 2B includes a plurality of cell modules 1 arranged at intervals along the second direction Y. The battery modules 1 include the battery module 1 described in any one of the above embodiments.

It can be understood that the battery module 1 has been described in detail in the above embodiments, and the description will not be repeated here.

In some embodiments, the plurality of side beams 2A2 are sequentially connected to enclose to form a plurality of annular structures 2D. The annular structures 2D and the battery modules 1 are in one-to-one correspondence. The annular structures 2D are disposed around the battery modules 1. Specifically, the bottom plate 2A1 and the plurality of side beams 2A2 form a plurality of accommodating sub cavities 2C1 for placing the battery modules 1. One of the accommodating sub cavities 2C1 is provided corresponding to one of the battery modules 1.

It should be noted that in the embodiments, the technical solution of the present disclosure is illustrated by taking the battery pack 2 including a first battery module 1A, a second battery module 1B, a third battery module 1C, and a fourth battery module 1D as an example.

In some embodiments, in any one of the battery modules 1, the plurality of cooling plates 22 include two first cooling plates 22A and a plurality of second cooling plates 22B. The two first cooling plates 22A are disposed opposite each other along the first direction X. The plurality of second cooling plates 22B are disposed between the two first cooling plates 22A at intervals. The first cooling plate 22A includes an extension portion 22A1 extending from an end of the first cooling plate 22A towards a direction away from the second cooling plate 22B, and the extension portion 22A1 is fixedly connected to the side beam 2A2.

Specifically, the extension portion 22A1 includes a plurality of first openings 22A11 provided at intervals along the second direction Y. The side beam 2A2 includes a plurality of second openings provided at intervals along the second direction Y. The first openings 22A11 and the second openings (not shown in the figure) are in one-to-one correspondence. The extension portion 22A1 and the side beam 2A2 are connected by threads.

It can be understood that in the embodiments, the first cooling plate 22A includes an extension portion 22A1, the extension portion 22A1 extends from the end of the first cooling plate 22A towards the direction away from the second cooling plate 22B, and the extension portion 22A1 is fixedly connected to the side beam 2A2, so that the battery module 1 is limited, the battery module 1 can be prevented from moving when the battery pack 2 is subjected to external impact, and the stability of the battery pack 2 can be improved. In addition, by providing a threaded connection between the extension portion 22A1 and the side beam 2A2, the disassembly, assembly and maintenance are facilitated.

In some embodiments, the box 2A further includes a liquid outlet pipeline 2A4 located between adjacent cell modules 2B, and two liquid inlet pipelines 2A3 opposite each other along the first direction X. The liquid inlet pipeline 2A3 is located on a side of the battery module 1 away from the liquid outlet pipeline 2A4. The liquid outlet pipeline 2A4 is provided with a plurality of liquid outlet openings 2A41 sequentially arranged along the second direction Y. The liquid inlet pipeline 2A3 is provided with a plurality of liquid inlet openings 2A31 sequentially arranged along the second direction Y. In any one of the battery modules 1, one of the liquid inlet openings 2A31 is provided corresponding to one of the first cooling plates 22A, and the liquid inlet opening 2A31 is in communication with the liquid inlet hole 24A of the current collector 24 corresponding to the one of the first cooling plates 22A. One of the liquid outlet openings 2A41 is provided corresponding to the other of the first cooling plates 22A, and the liquid outlet opening 2A41 is in communication with the liquid outlet hole 24B of the current collector 24 corresponding to the other of first cooling plate 22A.

Specifically, the liquid inlet pipeline 2A3 includes a liquid inlet nozzle 2A32, and the liquid outlet pipeline 2A4 includes a liquid outlet nozzle 2A42. The liquid inlet nozzle 2A32 is connected to an external device (not shown in the figure), and the liquid outlet nozzle 2A42 is connected to an external device. However, the external device is a conventional device, and is capable of supplying a coolant to the liquid cooling module 20 and recovering the coolant flowing out of the liquid cooling module 20.

In some embodiments, the coolant enters the cooling plate 22 from the liquid inlet nozzle 2A32. The coolant circulates in and out of the cooling plate 22 through the liquid inlet hole 24A and the liquid outlet hole 24B. The coolant flows back from the liquid outlet nozzle 2A42 to the external device. In the first battery module 1A, the flow direction of the coolant is: a1 → b1 → c1 → d1 → e1. In the second battery module 1B, the flow direction of the coolant is: a1 → b2 → c2 → d2 → e2. In the third battery module 1C, the flow direction of the coolant is: a2 → b3 → c3 → d3 → e2. In the fourth battery module 1D, the flow direction of the coolant is: a2 → b4 → c4 → d4 → e2.

It can be understood that in the embodiments, the box 2A further includes a liquid outlet pipeline 2A4 located between the adjacent cell modules 2B and two liquid inlet pipelines 2A3 opposite each other along the first direction X, so that the structure is simplified, the installation space is reduced, the disassembly, assembly and maintenance are facilitated, and the cost is also reduced. Further, the coolant flows in from both sides of the box 2A and then flows out between the adjacent cell modules 2B, thereby reducing the flow resistance of the coolant inlet in the liquid cooling assembly 20 and improving the heat dissipation effect of the cooling plate 22. In addition, by providing the liquid outlet pipeline 2A4 to be between the two cell modules 2B, the coolant flows from the liquid inlet pipeline 2A3 on both sides into the cooling plate 22 of each module and then collects in the liquid outlet pipeline 2A4 in the middle portion. Just one liquid outlet pipeline 2A4 is needed to realize backflow, the space is saved, and the temperature uniformity of heat dissipation can be improved by the way of collecting from both sides to the middle portion.

In some embodiments, referring to FIGS. 3, 6, 7, and 8, FIG. 8 is a schematic cross-sectional view of a battery pack provided by the embodiments of the present disclosure.

The tray 21, the bottom plate 2A1, and the side beam 2A2 are surrounded to form a pressure relief channel 2E. The pressure relief hole 210 is in communication with the pressure relief channel 2E. Specifically, the hole diameter of the pressure relief hole 210 is smaller than the diameter of the cell 111. The design of the pressure relief channel 2E reduces the impact generated when the cell 111 bursts, and improves the safety of the operation of the battery module 1. In addition, providing the pressure relief hole 210 can quickly dissipate the heat of the cell 111 or the gas generated when thermal runaway occurs in the battery from the bottom of the cell 111. The heat dissipation effect is enhanced, the safety performance of the structure of the battery pack 2 is increased, the gas pressure inside the battery pack 2 is reduced, and the gas generated by the cell 111 is prevented from entering the accommodation cavity 2C, thereby ensuring that the temperature of the accommodation cavity 2C does not rise rapidly.

It should be noted that a material of the box 2A is a metal. The tray 21 is made of plastic or other material with good insulation, which can prevent the bottom surface of the cell 111 from coming into contact with the bottom plate 2A1 and play an insulation protection role. In addition, a mica plate may also be provided between the tray 21 and the bottom plate 2A1, and the mica plate covers the pressure relief hole 210. The chemicals and gases sprayed by the cells 111 are sprayed onto the mica plate first, thereby preventing the box 2A from being burned through.

The present embodiments provide an electrical device including the battery module in any one of the above embodiments.

It can be understood that the battery module has been described in detail in the above embodiments, and the description will not be repeated here.

The electrical device includes the battery module, and the battery module is used as a power supply for the electrical device. Therefore, the electrical device also has various advantages of the battery module, thereby helping to simplify the overall structure of the electrical device. The electrical device may be an automobile, an aircraft, a mechanical production apparatus, or the like.

## Claims

1. A battery module, comprising:
a cell assembly comprising a plurality of cell sub groups disposed at intervals along a first direction, wherein each of the cell sub groups comprises a plurality of cells, and the plurality of cells in any one of the cell sub groups are disposed at intervals along a second direction; and
a tray comprising a plurality of cell accommodating grooves disposed at intervals along the first direction, wherein one of the cell accommodating grooves is provided corresponding to one of the cell sub groups, and a coolant flow channel is arranged in a side wall of each of the cell accommodating grooves.

2. The battery module of claim 1, wherein the battery module further comprises a plurality of current collectors disposed at both ends of the side wall of the each of the cell accommodating grooves and a plurality of connecting members disposed between adjacent two of the current collectors, ones of the current collectors on one side are provided with a liquid inlet hole, and ones of the current collectors on another side are provided with a liquid outlet hole.

3. The battery module of claim 2, wherein the tray comprises a baseplate and a plurality of cooling plates located on the baseplate, the plurality of cooling plates are disposed at intervals along the first direction, one of the cell accommodating grooves is located between adjacent two of the cooling plates, and the baseplate is integrally formed with the cooling plates.

4. The battery module of claim 3, wherein each of the cooling plates comprises a plurality of coolant flow channels, the plurality of the coolant flow channels are disposed at intervals along a third direction, and the coolant flow channels penetrate corresponding one of the cooling plates along the second direction; and
both ends of one of the coolant flow channels are provided with a liquid inlet port and a liquid outlet port, respectively, the liquid inlet port is in communication with the liquid inlet hole, and the liquid outlet port is in communication with the liquid outlet hole.

5. The battery module of claim 4, wherein the battery module comprises a plurality of first current collectors and a plurality of second current collectors, the first current collectors are provided with the liquid inlet hole, the second current collectors are provided with the liquid outlet hole, the liquid inlet port is in communication with the first current collectors, and the liquid outlet port is in communication with the second current collectors; and the coolant flow channels are linear channels.

6. The battery module of claim 3, wherein a plurality of explosion-proof valves are provided on a side of the cells close to the baseplate, the baseplate is provided with a plurality of pressure relief holes, the pressure relief holes penetrate the baseplate, and one of the pressure relief holes is provided corresponding to one of the explosion-proof valves.

7. The battery module of claim 6, wherein a hole diameter of one of the pressure relief holes is smaller than a diameter of one of the explosion-proof valves.

8. The battery module of claim 1, wherein each of the cells comprises a first side surface and a second side surface, the first side surface is disposed close to a side wall of corresponding one of the cell accommodating grooves, the second side surface is located between adjacent two of the cells, and a length of the first side surface is greater than a length of the second side surface; and
the battery module further comprises a plurality of heat insulating layers and a plurality of thermally conductive structural adhesives, each of the heat insulating layers is located between second side surfaces of the adjacent two of the cells, and each of the thermally conductive structural adhesives is located between the side wall of corresponding one of the cell accommodating grooves and one of the cells.

9. A battery pack, comprising:
a box comprising a bottom plate and a plurality of side beams, wherein the plurality of side beams are fixedly arranged on edges of the bottom plate to enclose to form an accommodation cavity; and
a plurality of cell modules located in the accommodation cavity, wherein the plurality of cell modules are disposed at intervals along a first direction, each of the cell modules comprises a plurality of battery modules disposed at intervals along a second direction, each of the battery modules comprises a cell assembly and a tray;
wherein the cell assembly comprises a plurality of cell sub groups disposed at intervals along the first direction, each of the cell sub groups comprises a plurality of cells, and the plurality of cells in any one of the cell sub groups are disposed at intervals along the second direction; and
the tray comprises a plurality of cell accommodating grooves arranged at intervals along the first direction, one of the cell accommodating grooves is provided corresponding to one of the cell sub groups, and a coolant flow channel is arranged in a side wall of each of the cell accommodating grooves.

10. The battery pack of claim 9, wherein in any one of the battery modules, a plurality of cooling plates comprise two first cooling plates and a plurality of second cooling plates, the two first cooling plates are disposed opposite each other along the first direction, the plurality of second cooling plates are located between the two first cooling plates, each of the first cooling plates comprises an extension portion extending from an end of the first cooling plates towards a direction away from the second cooling plates, and the extension portion is fixedly connected to one of the side beams.

11. The battery pack of claim 10, wherein the box further comprises a liquid outlet pipeline located between adjacent two of the cell modules and two liquid inlet pipelines opposite each other along the first direction, and each of the liquid inlet pipelines is located on a side of corresponding one of the battery modules away from the liquid outlet pipeline, the liquid outlet pipeline is provided with a plurality of liquid outlet openings sequentially arranged along the second direction, and each of the liquid inlet pipelines is provided with a plurality of liquid inlet openings sequentially arranged along the second direction;
in any one of the battery modules, one of the liquid inlet openings is provided corresponding to one of the first cooling plates, the one of the liquid inlet openings is in communication with a liquid inlet hole of a current collector corresponding to the one of the first cooling plates, one of the liquid outlet openings is provided corresponding to another of the first cooling plates, and the one of the liquid outlet openings is in communication with a liquid outlet hole of a current collector corresponding to the another of the first cooling plates.

12. The battery pack of claim 9, wherein the tray, the bottom plate, and the side beams are enclosed to form a pressure relief channel, and the pressure relief holes are in communication with the pressure relief channel.

13. The battery pack of claim 12, wherein a hole diameter of one of the pressure relief holes is smaller than a diameter of one of the cells.

14. The battery pack of claim 9, wherein the battery module further comprises a plurality of current collectors disposed at both ends of the side wall of the each of the cell accommodating grooves and a plurality of connecting members disposed between adjacent two of the current collectors, ones of the current collectors on one side are provided with a liquid inlet hole, and ones of the current collectors on another side are provided with a liquid outlet hole.

15. The battery pack of claim 14, wherein the tray comprises a baseplate and a plurality of cooling plates located on the baseplate, the plurality of cooling plates are disposed at intervals along the first direction, one of the cell accommodating grooves is located between adjacent two of the cooling plates, and the baseplate is integrally formed with the cooling plates.

16. The battery pack of claim 15, wherein each of the cooling plates comprises a plurality of coolant flow channels, the plurality of the coolant flow channels are disposed at intervals along a third direction, and the coolant flow channels penetrate corresponding one of the cooling plates along the second direction; and
both ends of one of the coolant flow channels are provided with a liquid inlet port and a liquid outlet port, respectively, the liquid inlet port is in communication with the liquid inlet hole, and the liquid outlet port is communication with the liquid outlet hole.

17. The battery pack of claim 16, wherein the battery module comprises a plurality of first current collectors and a plurality of second current collectors, the first current collectors are provided with the liquid inlet hole, the second current collectors are provided with the liquid outlet hole, the liquid inlet port is in communication with the first current collectors, and the liquid outlet port is in communication with the second current collectors; and the coolant flow channels are linear channels.

18. The battery pack of claim 15, wherein a plurality of explosion-proof valves are provided on a side of the cells close to the baseplate, the baseplate is provided with a plurality of pressure relief holes, the pressure relief holes penetrate the baseplate, and one of the pressure relief holes is provided corresponding to one of the explosion-proof valves.

19. The battery pack of claim 18, wherein one end of the cells provided with the explosion-proof valves are in communication with the pressure relief holes.

20. The battery pack of claim 9, wherein each of the cells comprises a first side surface and a second side surface, the first side surface is disposed close to a side wall of corresponding one of the cell accommodating grooves, the second side surface is located between adjacent two of the cells, and a length of the first side surface is greater than a length of the second side surface; and
the battery module further comprises a plurality of heat insulating layers and a plurality of thermally conductive structural adhesives, each of the heat insulating layers is located between second side surfaces of the adjacent two of the cells, and each of the thermally conductive structural adhesives is located between the side wall of corresponding one of the cell accommodating grooves and one of the cells.
